# EUROPEAN PATENT SPECIFICATION

(11) **EP 0 412 559 B1**
(45) Date of publication and mention of the grant of the patent: **02.02.1994**
(21) Application number: 90115400.5
(22) Date of filing: 10.08.1990
(51) Int. Cl.: F16D 13/68

(54) **Clutch disc**
Kupplungsscheibe
Disque d'embrayage

(30) Priority: 11.08.1989 PL 281047
(43) Date of publication of application: 13.02.1991
(73) Proprietor: FABRYKA SAMOCHODOW OSOBOWYCH ZAKLAD SPRZEGIEL, 67120 Kozuchow (PL)
(72) Inventor: Malitowicz, Józef, PL-67-120 Kozuchów (PL)
(74) Representative: Füchsle, Klaus, Dipl.-Ing.

(56) References cited:
- EP-A- 0 209 314
- DE-C- 671 014
- FR-A- 722 512
- FR-A- 2 197 433
- FR-A- 2 242 606
- FR-A- 2 270 491

## Description

This invention relates to a clutch disc with idle running torsional vibration damper used in automotive vehicles.

The clutch disc heretofore used consists of a hub, on which a flange elastically coupled with it has been mounted. On one side of said flange on said hub there is a side disc with an elastic disc with frictional lining fastened to it, and on the other side of said flange there is side disc. Clutch disc is provided with a torsional vibration damper for damping vibrations occuring during the operation of the clutch. This damper has been composed of several helical springs situated over circumference in suitable seats that is holes made in elastic disc and in flange. Springs are protected against falling out by means of suitable bends made in side discs. The damper has frictional washers between the flange and the elastic disc and between the flange and the side disc. The clutch disc known, for example, from the French Patent Specification FR-A-2,270,491 has additionally an idle running torsional vibration damper situated on the hug joint. The afore mentioned damper is made of helical springs situated over the circumference in suitable seats. One part of these seats is made in the hub and the other part, in the flange. Springs are so arranged that their axes are tangential to the circumference of the hub. Springs are terminated on the both sides with locking blocks whose cylindrical parts are inserted in the spring, and the portions projecting from the spring have the faces shaped so that they be fitted to the surface of the seat.

In the clutch disc in a idle running torsional vibration damper thus made there occurs an unavoidable displacement of the spring locking blocks during a change of direction of force between the hub and the flange, which leads to wear of these parts and, in consequence, a shorter service life of the clutch. Moreover, small dimensions of the locking blocks make difficult the assembly of the damper. The damper of the design so far known has some range of insensibility during a change of the direction of force. This insensibility has been caused by the rigidity of the springs due to their preliminary assembly tension.

A further prior art of interest is EP-A-O 209 314. This prior art discloses an arrangement very similar to Fig. 3 of the present disclosure (described hereinafter) of the present disclosure except that it has two diametrically opposed springs acting on a central hub, each spring 9 being housed at its radially inner end in a plunger that the spring pushes towards the hub 1. Each plunger of the prior art has a conical nose at its radially inner end and this conical nose projects into a correspondingly shaped conical socket in the hub 1. To permit the pungers to slide in a flange corresponding to the present flange 3, the flange of the prior art is formed with cylindrical recesses to slidingly accommodate the plungers. This is a somewhat complicated arrangement to manufacture and it is one of the objects of the present invention to provide a more economical to manufacture clutch disc.

The present invention is aimed at the elimination of the drawbacks and inconveniences of the known clutch discs.

### Summary of the Invention

The present invention is as defined in the accompanying Claim 1 that has been divided into a two-part form based on the assumption that EP-A-O 209 314 is the nearest state of the art.

According to the present invention a clutch disc has an idle running torsional vibration damper consisting of one or several spring elements situated radially in the seats between the hub and the flange. In said flange at the connection with the spring element there are protrusions for locking said spring elements in the longitudinal direction.

In the clutch disc thus made the idle running torsional vibration damper is sensitive within the full angular working range and guarantees durability and constant working parameters when in operation.

### Particular Embodiment

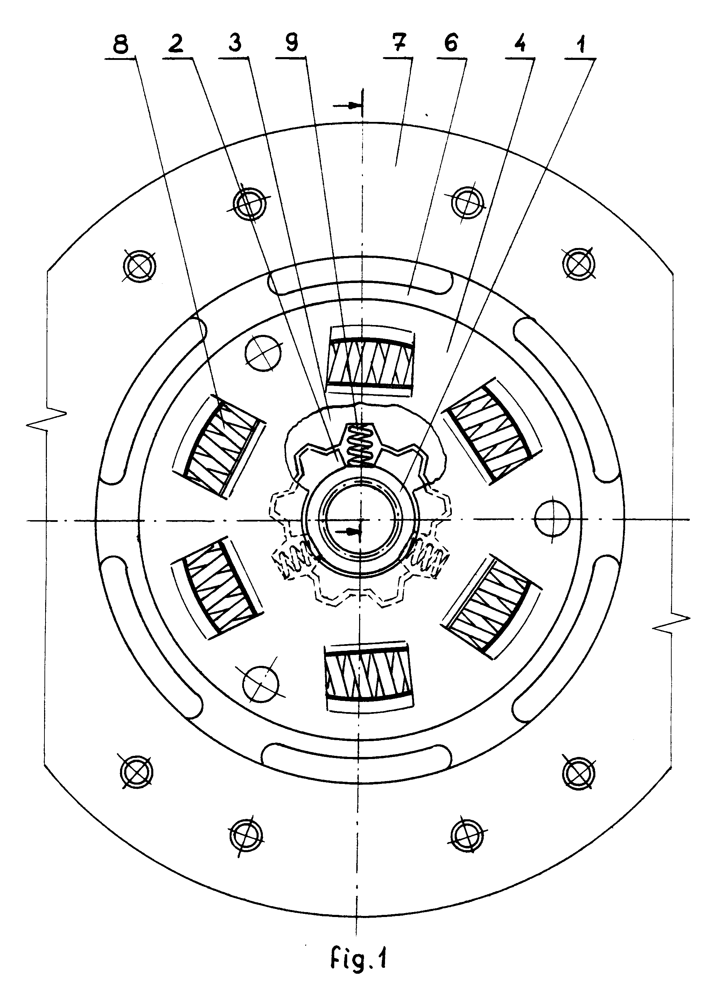

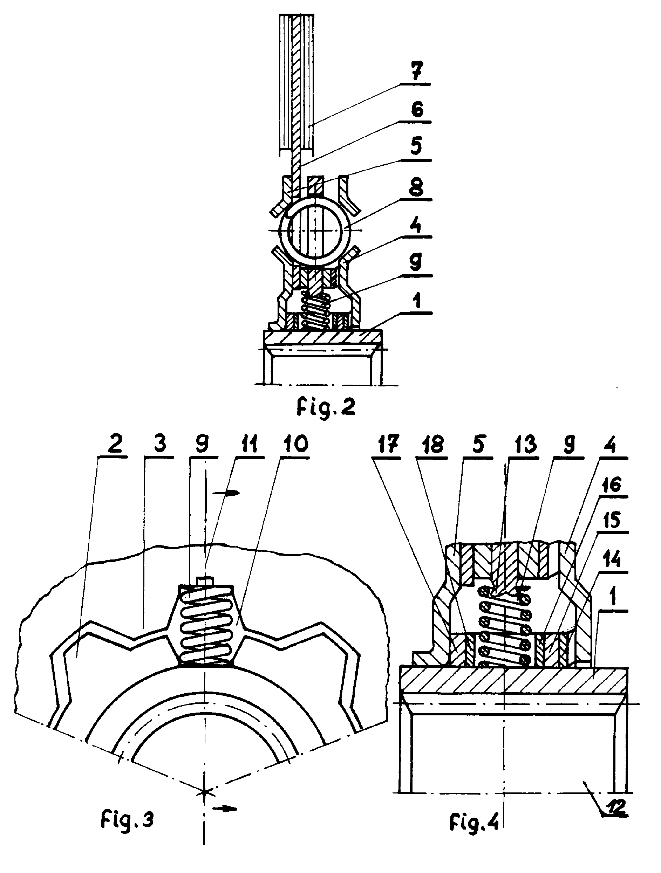

The subject of the invention is shown by an example embodiment on the accompanying drawing, wherein fig.1 presents the side view of the clutch disc, fig. 2 visualizes a fragment of the clutch disc in the cross section, fig. 3 shows a fragment of the clutch disc with a visible idle running torsional vibration damper in side view, and fig. 4 presents the same fragment of the clutch disc in a vertical section.
The clutch disc according to this invention has a hub 1 with a rim 2. On said hub 1 there is mounted a flange 3 coupled elastically with it. On one side of said flange 3 on the hub 1, there is mounted a side disc 4 and on the other side of said flange 3 there is a side disc 5 with a disc 6 with frictional lining 7 mounted to it. The clutch disc has a known main torsional vibration damper 8. Moreover, said clutch disc also has an idle running torsional vibration damper. The latter consists of one or several helical springs 9, placed radially in seats 10. Axis 11 of springs 9 is perpendicular to axis 12 of rotation of the clutch disc. Seats 10 are made partly in flange 3 and partly in rim 2 of hub 1. Flange 3 has protrusions 13 for fixing the springs 9 in longitudinal direction. Between the side disc 4 and the springs 9 on the hub 1 there are spring washer 14, frictional washer 15 and steel washer 16, whereas between said side disc 5 and springs 9 there are mounted frictional washers 17 and steel washer 18.
Reference signs in the claims are intended for better understanding and shall not limit the scope.

## Claims

1. A clutch disc provided with an idle running torsional vibration damper comprising a flange (3) surrounding a hub (1) and coupled thereto by a plurality of radially extending elastic elements (9) having their radially outer ends acting against seats made in said flange (3);
**characterized in that**
said elastic elements (9) press with their radially inner ends against flat seats formed in said hub.

2. A clutch disc as in Claim 1 wherein said hub (1) comprises a radially extending rim (2) and said flat seats are formed in said rim.

3. A clutch disc as in Claim 1 or Claim 2 and wherein said hub (1) is surrounded by two steel washers (16, 18) with said elastic elements (9) extending therebetween.

4. A clutch disc as in Claim 3 and comprising two frictional washers (15, 17) surrounding said hub (1), one frictional washer (15) acting against that face of one steel washer (16) that faces away from said elastic elements (9); and the other frictional washer (17) against that face of the other steel washer (18) that faces away from said elastic elements (9).

5. A clutch disc as in Claim 4 and comprising side discs (4, 5) surrounding said hub (1), one side disc (5) acting directly against one of said frictional washers (17) and the other side disc (4) acting against the other of said frictional washers (15) via a spring washer (14).

6. A clutch disc as in any of Claims 1 to 5 and wherein each of said elastic elements (9) is a helical spring.

7. A clutch disc as in Claim 6 and wherein the flange (3) has as plurality of radially inwardly directed protrusions (13), one for each helical spring and extending into the radially outer end of its associated spring.

## Patentansprüche

1. Eine Kupplungsscheibe mit einem Freilauf-Drehschwingungsdämpfer umfaßt einen Flansch (3), der eine Nabe (1) umgibt und an diese durch mehrere sich radial erstreckende elastische Elemente (9) gekoppelt ist, deren radial äußere Enden gegen in dem Flansch (3) ausgebildete Sitze wirken;
dadurch **gekennzeichnet**, daß
die elastischen Elemente (9) mit ihren radial inneren Enden gegen in der Nabe ausgebildete flache Sitze drücken.

2. Kupplungsscheibe nach Anspruch 1,
dadurch **gekennzeichnet**, daß
die Nabe (1) einen sich radial erstreckenden Radkranz (2) aufweist und die flachen Sitze in dem Radkranz ausgebildet sind.

3. Kupplungsscheibe nach Anspruch 1 oder 2,
dadurch **gekennzeichnet**, daß
die Nabe (1) von zwei Stahlscheiben (16, 18) umgeben ist, zwischen denen sich die elastischen Elemente (9) erstrecken.

4. Kupplungsscheibe nach Anspruch 3,
dadurch **gekennzeichnet**, daß
diese zwei die Nabe (1) umgebende Reibungsscheiben (15, 17) aufweist, wobei eine Reibungsscheibe (15) gegen diejenige Fläche einer Stahlscheibe (16) wirkt, die von den elastischen Elementen (9) wegweist; und die andere Reibungsscheibe (17) gegen diejenige Fläche der anderen Stahlscheibe (18) wirkt, die von den elastischen Elementen (9) wegweist.

5. Kupplungsscheibe nach Anspruch 4,
dadurch **gekennzeichnet**, daß
diese die Nabe (1) umgebende Seitenscheiben (4, 5) aufweist, wobei eine Seitenscheibe (5) direkt gegen eine Reibungsscheibe (17) wirkt und die andere Seitenscheibe (4) über eine Federscheibe (14) gegen die andere Reibungsscheibe (15) wirkt.

6. Kupplungsscheibe nach einem der Ansprüche 1 bis 5,
dadurch **gekennzeichnet**, daß
jedes elastische Element (9) eine Schraubenfeder ist.

7. Kupplungsscheibe nach Anspruch 6,
dadurch **gekennzeichnet**, daß
der Flansch (3) mehrere radial nach innen gerichtete Vorsprünge (13) aufweist, wobei jeweils einer für eine Schraubenfeder vorgesehen ist und sich in das radial äußere Ende seiner zugeordneten Feder erstreckt.

## Revendications

1. Disque d'embrayage ayant un amortisseur de vibrations de torsion à fonctionnement à vide comprenant un flasque (3) qui entoure un moyeu (1) et qui est couplé à celui-ci par plusieurs éléments élastiques (9) disposés radialement et dont les extrémités radialement externes agissent sur des sièges formés dans le flasque (3),
caractérisé en ce que les éléments élastiques (9) repoussent les sièges plats formés dans le moyeu par leurs extrémités radialement internes.

2. Disque d'embrayage selon la revendication 1, dans lequel le moyeu (1) a un rebord (2) disposé radialement et les sièges plats sont formés dans le moyeu.

3. Disque d'embrayage selon la revendication 1 ou 2, dans lequel le moyeu (1) est entouré par deux rondelles d'acier (16, 18), les éléments élastiques (9) étant placés entre eux.

4. Disque d'embrayage selon la revendication 3, comprenant deux rondelles de friction (15, 17) entourant le moyeu (1), une première rondelle de friction (15) agissant contre la face d'une première rondelle d'acier (16) qui est tournée du côté opposé aux éléments élastiques (9), et l'autre rondelle de friction (17) étant placée contre la face de l'autre rondelle d'acier (18) qui est tournée du côté opposé aux éléments élastiques (9).

5. Disque d'embrayage selon la revendication 4, comprenant des disques latéraux (4, 5) qui entourent le moyeu (1), un premier disque latéral (5) agissant directement contre l'une des rondelles de friction (17) et l'autre disque latéral (4) agissant contre l'autre des rondelles de friction (15) par l'intermédiaire d'une rondelle élastique (14).

6. Disque d'embrayage selon l'une quelconque des revendications 1 à 5, dans lequel chacun des éléments élastique (9) est un ressort hélicoïdal.

7. Disque d'embrayage selon la revendication 6, dans lequel le flasque (3) a plusieurs saillies (13) dirigées radialement vers l'intérieur, une pour chaque ressort hélicoïdal, et disposées dans l'extrémité radialement externe du ressort associé.
